# EUROPÄISCHE PATENTSCHRIFT

(11) **EP 0 709 627 B1**
(45) Veröffentlichungstag und Bekanntmachung des Hinweises auf die Patenterteilung: **09.07.2003**
(21) Anmeldenummer: 95810567.8
(22) Anmeldetag: 13.09.1995
(51) Int. Cl.: F24F 11/00, G05D 23/19

(54) **Verfahren zur Zustandsregelung der klimatischen Verhältnisse in einem Innenraum**
Method for controlling the state of climatic conditions in the interior of a room
Méthode de contrôle de l'état des conditions climatiques à l'intérieur d'un habitacle

(30) Priorität: 26.10.1994 CH 320194
(43) Veröffentlichungstag der Anmeldung: 01.05.1996
(73) Patentinhaber: Jakob, Huber, Ing., 1806 St.-Légier (CH)
(72) Erfinder: Jakob, Huber, Ing., 1806 St.-Légier (CH)
(74) Vertreter: Winkler, Kurt, Dr.

(56) Entgegenhaltungen:
- EP-A- 0 405 149
- CH-A- 683 637
- US-A- 5 000 381
- PATENT ABSTRACTS OF JAPAN vol. 017, no. 410 (M-1455), 30.Juli 1993 & JP 05 079681 A (MATSUSHITA SEIKO CO LTD), 30.März 1993,

## Beschreibung

Die Erfindung betrifft ein Verfahren zur Zustandsregelung der klimatischen Verhältnisse in einem Innenraum unter Einhaltung der Raumtemperatur innerhalb einer wählbaren Bandbreite durch gesteuerte Durchlüftung des Raumes mit Aussenluft, wobei die Temperatur der Aussenluft und die Temperatur der Raumes gemessen werden, und sobald die aus diesen beiden Temperaturen ermittelte Differenz einen wählbaren Minimalwert überschreitet, die Durchlüftung durch Schliessen eines Stromkreises ausgelöst wird, in welchem der Antriebsmotor mindestens eines Ventilators liegt, und sobald die Differenz unter den Minimalwert absinkt, der Stromkreis unterbrochen wird; ferner betrifft die Erfindung eine Regeleinrichtung zur Durchführung dieses Verfahrens.

Zur Kühlung von Räumen ist es bekannt, Kühlmaschinen einzusetzen, welche mittels elektrischer Energie Kälte erzeugen. Wegen des damit verbundenen grossen maschinellen und Energieaufwandese greift man oft zu dem einfachen Mittel, nachts die Fenster zu öffnen, um die kalte Nachtluft einströmen zu lassen. Nachteilig ist dabei,dass die Fenster tagsüber geschlossen werden müssen, um das Einströmen warmer Luft zu verhindern. Dabei muss auch die Aussen- und die Innentemperatur überwacht werden.

In Weinkellern, chemischen Laboratorien oder für Gärprozesse ist oftmals die Temperatur des Raumes möglichst konstant oder in engen Grenzen zu halten. In solchen Fällen ist ein noch grösserer Aufwand notwendig.

In manchen Ländern ist Holz der dominierende Anteil am Baumaterial. Solange in den Hohlräumen unter den Häusern die Feuchtigkeit der Luft und damit auch des Holzes unterhalb einer gewissen Grenze gehalten werden kann, ist meistens der Zerfall des letzteren nur minimal. Es gibt aber auch viele Gebiete mit ausgeprägter Sommerfeuchtigkeit, in der die Holzunterbauten rasch zerfallen können und Pilzbildung ist kaum zu verhindern, wenn sie zu lange und unkontrolliert dieser Feuchtigkeit ausgesetzt sind.

Es kommt aber auch vor, dass Radon oder andere gesundheitsschädliche Gase aus dem Erdboden austreten, die sich im Hohlraum unter einem Hause sammeln und durch den Fussboden in den Wohnraum eindringen. Auch in Laboratorien können giftige oder explosionsfähige Gase auftreten.

Bei den geschilderten Vorkommnissen ist eine natürliche Luftzirkulation nur in seltenen Fällen ausreichend.

Eine Verbesserung ergibt sich bei Anwendung eines bekannten Verfahrens (CH-A-683 637) zur Belüftung eines Raumes, um ihn zu kühlen. Wenn die Aussentemperatur tiefer ist als die Innentemperatur, wird ein Ventilator automatisch eingeschaltet, welcher Frischluft in den Raum fördert. Er wird wieder abgeschaltet, sobald die Innentemperatur bis auf die Aussentemperatur abgesunken ist oder ein Thermostat im Raume feststellt, dass eine vorprogrammierte untere Temperaturgrenze erreicht ist, weshalb die weitere Belüftung eingestellt wird.

Eine Weiterentwicklung zeigt die ebenfalls bekannte Installierung eines Fensterventilators für die Kühlung eines Raumes durch Aussenluft (US-A-5000 381). Der Ventilator wird automatisch eingeschaltet, wenn die Temperaturdifferenz zwischen Innen- und Aussentemperatur positiv und genügend hoch ist, die Innentemperatur oberhalb eines vorprogrammierten Grenzwertes liegt und der Feuchtigkeitsgehalt der Aussenluft unterhalb eines festgelegten Grenzwertes liegt. Der Ventilator wird wieder abgeschaltet, sobald die Temperaturdifferenz zu klein wird oder die Innentemperatur genügend abgesunken ist.

Der Erfindung liegt die Aufgabe zugrunde, ein Verfahren anzugeben, um mit Hilfe der Aussenluft einen Innenraum zu kühlen oder zu erwärmen, wobei die Einleitung und Durchführung des jeweils notwendigen Vorganges automatisch zu regeln ist. Ferner soll für den Fall des Auftretens einer zu hohen Konzentration schädlicher Gase oder einer zu hohen Feuchtigkeit eine rasche Gegenmassnahme möglich sein. Eine

Einrichtung zur Durchführung dieses Verfahrens soll vollautomatisch funktionieren und keinen personellen Einsatz benötigen.

Diese Aufgabe wird durch die kennzeichnenden Merkmale der Ansprüche 1 bzw. 10 gelöst.

Nach dem erfindungsgemässen Verfahren kann ein Raum durch gesteuerte Durchlüftung mit Aussenluft mit der selben Einrichtung gleicherweise gekühlt wie erwärmt werden. Die einfach auszuführende Umschaltung von Kühlung auf Erwärmung - oder umgekehrt - kann nicht nur jahreszeitlich, im Extremfall sogar tageszeitlich bedingt sein, sondern auch z.B. zur Steuerung oder Unterstützung chemischer Prozesse von Vorteil sein. Bei Weinkellern beispielsweise ist es notwendig, dass die Temperatur des Raumes sommers und winters innerhalb bestimmter Grenzen gehalten wird. Der Raum wird daher normalerweise im Sommer zu kühlen und im Winter aufzuwärmen sein.

Die genannte Umschaltung wird nun für die Einhaltung der Raumtemperatur innerhalb einer bestimmten Bandbreite herangezogen. Überschreitet die Raumtemperatur den eingestellten oberen Grenzwert der Bandbreite, dann wird auf Kühlung geschaltet und der Raum kann nur gekühlt werden. Unterschreitet die Raumtemperatur den eingestellten unteren Grenzwert, dann wird auf Erwärmung geschaltet und der Raum kann nur erwärmt werden. Beides setzt natürlich voraus, dass die äusseren Verhältnisse entsprechen, d.h., dass zumindest eine einstellbare Minimaldifferenz zwischen Aussenluft- und Raumtemperatur oder umgekehrt, zwischen Raumund Aussenlufttemperatur vorhanden ist.

Durch zweckentsprechende Wahl eines unteren Grenzwertes für die Differenz zwischen den beiden Temperaturen wird vermieden, dass der Betrieb des Ventilators schon bei einer Temperaturdifferenz von z.B. 1°C einsetzt und er möglicherweise die ganze Nacht bei dieser kleinen Differenz arbeitet, was keine merkliche Temperaturänderung im Raume bewirken würde und somit sehr unwirtschaftlich wäre.

Zu erwähnen ist noch, dass bei einer Kühlung des Hohlraumes unter einem Wohnraum im Sommer und einer Erwärmung im Winter sich durch den Fussboden hindurch ein analoger Effekt auch im Wohnraum selbst einstellt, was die Belastung der Klimaanlage bzw. die Heizkosten herabsetzt. Dadurch ergibt sich über einen Grossteil des Jahres eine Reduktion der anfallenden Betriebskosten des Hauses.

Das Verfahren ist auch dann anwendbar, wenn der Raum mit Flüssigkeit gefüllt ist, wie es z.B. bei einem Schwimmbekken der Fall ist oder in der Verfahrenstechnik vorkommt. Als Beispiel seien die Durchlüftung zur Erwärmung oder Abkühlung von Flüssigkeiten oder die Förderung von chemischen und Gärprozessen genannt.

Der gesamte Regelvorgang wird vom Einfluss der Raumtemperatur als Führungsgrösse überlagert.Auch ist auf die gleiche Weise die Berücksichtigung weiterer, zusätzlicher Führungsgrössen möglich. Ebenso kann in kritischen Situationen eine Zwangsbelüftung des Raumes mit Aussenluft vorgenommen werden. Vorteilhaft ist dabei, wenn der Antriebsmotor des Ventilators reversierbar oder das ganze Aggregat um seine Achse schwenkbar ist. Dadurch bietet sich die Möglichkeit, den Ventilator in der einen oder anderen Förderrichtung laufen zu lassen.

Die selbe Einrichtung lässt sich dann wahlweise einsetzen, entweder zur Ausführung eines der erwähnten Regelverfahren oder zur Absaugung von giftigen Gasen, beispielsweise aus einem Gärkeller oder aus einem Werkraum, z.B. einem Garagenbetrieb, deren Betreten sonst gefährlich wäre. Das Einschalten auf Reversierbetrieb wird dabei vorteilhaft mit einem entsprechenden Sensor eingeleitet. Dies kann auch unabhängig vom sonstigen Betrieb durch einen überlagerten Regelkreis erfolgen.

Anhand der in der beiliegenden Zeichnung schematisch dargestellten Ausführungsbeispiele wird die Erfindung nachstehend näher erläutert. Es zeigen:
- Fig.1: die prinzipielle Ausführung einer Regeleinrichtung zur Durchlüftung eines Raumes unter Verwendung von zwei Schaltstellen im Stromkreis;
- Fig.2: eine Variante dazu mit nur einer Schaltstelle.

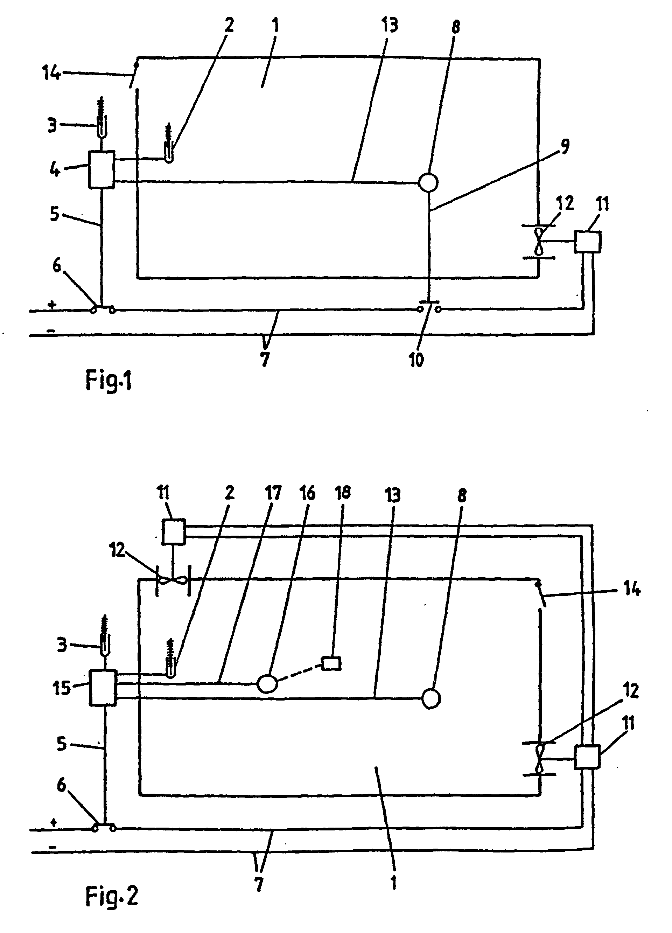

Nach Fig.1 ist im Innenraum 1 der Temperaturfühler 2, in der umgebenden Atmosphäre der Temperaturfühler 3 vorgesehen. Diese beiden Temperaturfühler leiten ihre Messwerte in die Elektronik 4, welche über die Leitung 5 mit der ersten Schaltstelle 6 im elektrischen Stromkreis 7 verbunden ist. Der im Raume 1 angeordnete Thermostat 8 ist über die Leitung 13 mit der Elektronik 4 und über die Leitung 9 mit der zweiten Schaltstelle 10 im Stromkreis 7 verbunden, in welchem der Antriebsmotor 11 für den Ventilator 12 liegt. Der Thermostat ist doppelwirkend, d.h. er ist auf einen unteren und einen oberen Grenzwert einer wählbaren Bandbreite der Raumtemperatur einstellbar.

Der Raum 1 soll beispielsweise durch Aussenluft gekühlt werden, sobald deren Temperatur genügend tief unter die Raumtemperatur abgesunken ist. Um letzteres festzustellen, ist die Elektronik 4 auf die Bildung der Differenz zwischen der Raumtemperatur t_{R} und der Aussenlufttemperatur t_{A} eingestellt.

Wenn die ermittelte Differenz aus den beiden Temperaturen einen wählbaren, in die Elektronik eingespeicherten Minimalwert überschreitet, schliesst die Elektronik die erste Schaltstelle 6 im Stromkreis 7, der Motor 11 beginnt zu laufen und der Ventilator 12 fördert kalte Aussenluft in den Raum. Dieser Vorgang ist unabhängig von der Absoluthöhe der beiden Temperaturen.

Sobald ein leichter Überdruck im Raume 1 auftritt, öffnet net die Lüftungsklappe 14 selbsttätig. Die abströmende Warmluft wird durch die ungefähr gleiche Menge eingeblasener Frischluft ersetzt.

Nähert sich die Raumtemperatur t_{R} der Aussenlufttemperatur t_{A} und die Differenz daraus unterschreitet den eingespeicherten Minimalwert, so unterbricht die Elektronik 4, weil sonst die Kühlwirkung zu stark absinken würde, den Stromkreis 7 an der Schaltstelle 6, wodurch der Ventilator 12 nicht mehr fördert.

Damit der Motor 11 zum Laufen kommt, ist natürlich Voraussetzung, dass der Stromkreis 7 auch an der zweiten Schaltstelle 10 geschlossen ist. Diese wird vom Thermostat 8 betätigt, welcher die Temperatur im Raume 1 überwacht. Sinkt sie bis auf den unteren Grenzwert der gewählten Bandbreite ab, ist also die gewünschte Kühlwirkung voll erreicht, so unterbricht der auf diesen Grenzwert eingestellte Thermostat den Stromkreis an der Schaltstelle 10, der Motor kommt zum Stillstand und der Ventilator 12 fördert keine Aussenluft mehr in den Raum.

Die Einrichtung kann ebenso für die Erwärmung eines Raumes vorgesehen werden, wobei sinngemäss der gleiche Regelvorgang abläuft. Sobald dies Elektronik 4 registriert, dass die Aussenlufttemperatur t_{A} genügend hoch über der Raumtemperatur t_{R} liegt, wird durch das Schliessen des Stromkreises 7 an der Schaltstelle 6 der Ventilator 12 eingeschaltet und warme Aussenluft strömt in den Raum ein. Selbstverständlich ist auch hier Voraussetzung, dass der Stromkreis 7 auch an der zweiten Schaltstelle 10 geschlossen ist.

Um eine zu starke Erwärmung des Raumes 1 zu vermeiden, ist der doppelwirkende Thermostat 8, wie oben beschrieben, auch auf einen zulässigen oberen Grenzwert der gewählten Bandbreite für die Raumtemperatur eingestellt. Wird dieser erreicht, unterbricht der Thermostat den Stromkreis 7 an der Schaltstelle 10, der Ventilator kommt zum Stillstand und eine weitere Erwärmung des Raumes unterbleibt.

Solcherart ist die beschriebene Regeleinrichtung gleicherweise für beide Fälle, nämlich für Kühlung oder Erwärmung eines Raumes anwendbar, nur muss die Elektronik dafür eingerichtet sein.

Um den in die Elektronik eingegebenen Minimalwert für die Temperaturdifferenz nicht für jede Jahreszeit oder sonstigen Bedarfsfall umkehren zu müssen, ist erfindungsgemäss vorgesehen, die Eingangsstellen der Verbindungsleitungen von den beiden Temperaturfühlern 2 und 3 in die Elektronik 4 miteinander vertauschbar zu machen. Dieses Vertauschen kann mittels eines einfachen (nicht gezeichneten) Umschalters an der Elektronik erfolgen, womit bei sonst gleichbleibender Instrumentierung und Funktionsweise das wahlweise Kühlen oder Erwärmen eines Raumes ermöglicht wird.

Durch die Vertauschbarkeit der beiden Eingangsstellen in die Elektronik wird erreicht, dass bei der Differenzbildung aus den beiden Temperaturen zur Kühlung des Raumes die Raumtemperatur t_{R} den Minuend und die Aussenlufttemperatur t_{A} den Subtrahend bildet, und zur Erwärmung des Raumes die Aussenlufttemperatur den Minuend und die Raumtemperatur den Subtrahend bildet.

Es ist von Vorteil, wenn das Vertauschen der Eingangsstellen automatisch erfolgt, was durch den Einfluss des Thermostats 8 geschehen kann, welcher für diesen Zweck über die Leitung 13 mit der Elektronik 4 verbunden ist.

Der Ablauf des erfindungsgemässen Regelverfahrens ist der folgende:
Überschreitet die Raumtemperatur den eingestellten oberen Grenzwert der Bandbreite, wird es also im Raume zu warm, so schaltet der Thermostat die Elektronik auf Kühlung und schliesst gleichzeitig die Schaltstelle 10. Ist es aussen kälter als im Raume und die in die Elektronik eingespeiste minimale, noch wirksame Differenz zwischen Aussenluft- und Raumtemperatur vorhanden oder überschritten, so ist die erste Schaltstelle 6 bereits geschlossen.

Der Stromkreis ist nun an keiner Stelle mehr unterbrochen und der Ventilator beginnt, Aussenluft in den Raum zu fördern. Sinkt im Laufe des Kühlvorgangs die Differenz zwischen Aussenluft- und Raumtemperatur unter den in die Elektronik eingegebenen Minimalwert ab, so unterbricht diese den Stromkreis an der Schaltstelle 6. Die Kühlung wäre jetzt zu wenig wirksam. Sinkt jedoch die Raumtemperatur unter den oberen Grenzwert der eingestellten Bandbreite ab, so unterbricht der Thermostat den Stromkreis an der Schaltstelle 10. Damit setzt in beiden Fällen die Förderung des Ventilators aus.

Unterschreitet die Raumtemperatur den eingestellten unteren Grenzwert der Bandbreite, wird es also im Raume zu kalt, so schaltet der Thermostat die Elektronik auf Erwärmung und schliesst die Schaltstelle 10. Der Regelvorgang läuft sinngemäss in gleicher Weise wie vorher beschrieben ab.

Liegt die Raumtemperatur wieder innerhalb der vorgesehenen Bandbreite, so bleibt der Stromkreis an der Schaltstelle 10 unterbrochen, bis wieder ein Grenzwert der Bandbreite über-bzw. unterschritten wird.

Der Thermostat hat somit eine zweifache Funktion zu erfüllen Über die Schaltstelle 6 die Durchlüftung eines Raumes an- oder abzustellen sowie bei zu warmem Raume die Elektronik auf Kühlung und bei zu kaltem Raume die Elektronik auf Erwärmung einzustellen.

Werden höhere Anforderungen an die Einhaltung einer bestimmten Rauntemperatur gestellt, die mit der Aussenluft allein nicht erreichbar sind, so können selbstverständlich zusätzliche Mittel zur Erwärmung oder Kühlung des Raumes eingesetzt werden.

Der Antriebsmotor 11 kann reversierbar ausgeführt sein, so dass der Ventilator 12 in beiden Drehrichtungen laufen kann. Das hat den Vorteil, dass je nach Wunsch entweder Aussenluft in den Raum hineingefördert werden kann oder - was besonders bei Anwesenheit schädlicher Gase vorzuziehen ist - die Luft aus dem Raume abgesogen wird, wobei dann Aussenluft von selbst durch eine Öffnung oder eine Klappe nachströmt. Die gleichen Möglichkeiten ergeben sich, wenn das gesamte Aggregat, also Antriebsmotor und Ventilatur zusammen um 180° schwenkbar sind, was von Hand, mechanisch oder elektrisch erfolgen kann.

Für den selben Raum können auch mehrere Ventilatoren vorgesehen werden, von denen der eine oder auch alle reversieroder schwenkbar sind. Das ist besonders bei winkeligen Räumen vorteilhaft, um tote Ecken mit stagnierender Luft zu vermeiden oder wenn z.B. im Winter die Lüftungsklappen geschlossen bleiben. Auch unterstützt es die Durchlüftung des Raumes, wenn der eine Ventilator auf Förderung und der andere auf Absaugung eingestellt ist.

Es sei noch erwähnt, dass im Falle der Kühlung des Raumes durch die Erwärmung der einströmenden kälteren Luft dieselbe Feuchtigkeit aufnehmen kann, womit ein oftmals sehr erwünschter Trocknungsvorgang stattfindet. Vorhandene Holzbalken werden dadurch trocken gehalten und die Schimmelbildung wird unterbunden. Mit der Durchlüftung des Raumes werden auch allenfalls vorhandene schädliche Gase abgeführt oder zumindest verdünnt.

Die an beliebiger Stelle, vorzugsweise an einem dem Ventilator 12 entgegengesetzten Ende des Raumes 1 angeordnete Lüftungsklappe 14 schliesst durch ihr Eigengewicht und öffnet bei Überschreitung einer kleinen, einstellbaren Druckdifferenz.

Sollte die Einrichtung auch für Reversierbetrieb mit Absaugung von Luft aus dem Raume vorgesehen sein, so wird die Klappe 14 zweckmässigerweise doppelseitig wirkend, also für beide Strömungsrichtungen verwendbar ausgeführt. Auch bei dieser Klappe kann ihr Eigengewicht zur Wirkung kommen. Solche Klappen können aber auch von Hand oder automatisch ge- . steuert werden, indem sie z.B. auf die Aussenlufttemperatur reagieren oder gleichzeitig mit dem Lauf des Ventilators geöffnet oder geschlossen werden.

Bei den vorstehend beschriebenen Regelfällen bildet die vom Thermostat gelieferte Raumtemperatur eine Führungsgrösse, deren Einfluss die Durchlüftung des Raumes durch Unterbrechen oder Schliessen des Stromkreises an der Schaltstelle 10 überlagert und so die Einhaltung dieser Führungsgrösse innerhalb wählbarer Grenzen erlaubt.

Ausser der Temperatur als Führungsgrösse, wie sie ein Thermostat oder ein sonstiger Temperaturfühler liefert, kann gleichzeitig eine zusätzliche Führungsgrösse für einen überlagernden Schaltvorgang eingesetzt werden.

Beispielsweise kann es notwendig sein, dass die Luftfeuchtigkeit in einem Raume einen bestimmten Grenzwert weder unter- noch überschreiten darf, oder im Raume ein Gut gelagert ist, das eine gewisse Feuchtigkeit aufweisen muss, also nicht zu stark austrocknen darf. Ein Feuchtigkeitsmesser, der auf den entsprechenden Grenzwert eingestellt ist, liefert dann eine zusätzliche Führungsgrösse, welche auf die gleiche Art, wie für den Thermostat beschrieben, auf die Schaltstelle 10 im Stromkreis 7 einwirkt. Es können aber auch andere, durch ein geeignetes Messgerät im Raume ermittelte Messwerte oder der gemessene physikalische, chemische oder biologische Zustand von im Raume gelagerten Gut als zusätzliche Führungsgrösse für einen Schaltvorgang herangezogen werden.

Auch zwei oder mehrere solcher Messgeräte können unabhängig voneinander in der beschriebenen Weise auf den Stromkreis 7 und damit auf die Förderung von Aussenluft in den Raum einwirken.

In manchen Gebieten kommt das gefährliche Radongas vor, welches aus dem Erdreich oder aus dem Grundwasser austritt. Es kann sich z.B. im Hohlraum unter einem Hause sammeln und dadurch auch die Wohnräume gefährden. Überschreitet die Konzentration einen zulässigen Grenzwert, muss sofort etwas dagegen unternommen werden. Das gleiche gilt beim Auftreten von anderen gesundheitsschädlichen Gasen, wie sie beispielsweise in Laboratorien oder bei Gärprozessen vorkommen.

Die erfindungsgemässe Einrichtung ist auch zur Abhilfe von derartigen Notfällen bestens geeignet. Es genügt, eine zusätzliche Messvorrichtung einzubauen, welche speziell für das betrffende schädliche Gas auszuwählen ist. Sobald die Konzentration des Gases einen festlegbaren, noch zulässigen Maximalwert überschreitet, schliesst die Messvorrichtung eine Schaltstelle in einer (nicht dargestellten) Parallelleitung des Stromkreises 7, welche die Schaltstellen 6 und 10 überbrückt. Damit wird der Ventilator 12 in Gang gesetzt und so eine Zwangsbelüftung des Raumes 1 mit Aussenluft erreicht, unabhängig von Temperaturdifferenzen oder Luftfeuchtigkeit, von Tages- oder Jahreszeit.

Je nach Wunsch kann dabei der Ventilator, wie schon oben ausgeführt, Aussenluft in den Raum fördern oder Luft mit dem schädlichen Gas aus dem Raume absaugen, wodurch Aussenluft nachströmt. Der durch das Absaugen entstehende Unterdruck verhindert auch, dass schädliches Gas aus dem Raume in einen darüber liegenden Wohnraum einsickern kann.

Das Einschalten der Zwangsbelüftung kann auch dann vorgesehen werden, wenn z.B. eine ständig vorgenommene Feuchtigkeitsmessung eines Holzbauteils im Hohlraum unter einem Hause die Überschreitung eines als kritisch angesehenen Feuchtigkeitsgehalts anzeigt. Die Zwangsbelüftung lässt sich bei diesem Anwendungsbeispiel im Winter praktisch immer, im Sommer aber nur dann durchführen, wenn die Aussentemperatur unter die Innentemperatur abgesunken ist. Es könnte sonst passieren, dass die einströmende Luft noch mehr Feuchtigkeit auf dem Holze ablagert.

Die Fig.2 zeigt eine der Fig.1 in Aufbau und Funktionsweise ähnliche Ausführung. Die Temperaturfühler 2 und 3 leiten ihre Messwerte zur Elektronik 15, welche die Differenz daraus bildet. Die Elektronik ist bei diesem Ausführungsbeispiel für die Registrierung sämtlicher Messwerte eingerichtet und über die Leitung 5 mit der einzigen Schaltstelle 6 im Stromkreis 7 verbunden, welche sie je nach Bedarf öffnet oder schliesst.

Zur Einhaltung einer gewünschten Bandbreite der Temperatur im Raume 1 dient der doppelwirkende Thermostat 8, der nur mit der Elektronik 15 über die Leitung 13 verbunden ist.

Mit dem Schliessen der Schaltstelle 6 im Stromkreis 7 setzt die Durchlüftung des Raumes 1 ein, wofür hier zwei Ventilatoren 12 verwendet werden, die gleichzeitig ein- und ausschaltbar sind. Es ist zweckmässig, wenn sie im Raume einander diagonal gegenüberliegen und auch reversierbar bzw. schwenkbar sind. Prinzipiell würde auch ein einziger Ventilator genügen.

Selbstverständlich können auch mehr als zwei Ventilatoren eingebaut werden, was besonders bei winkeligen Räumen von Vorteil ist. Die beste Wirkung lässt sich erzielen, wenn die eine Hälfte der Ventilatoren Luft aus dem Raume absaugt und die andere Hälfte Aussenluft in den Raum hineinbläst. Diese Aufgabenteilung ist selbst bei geschlossener Lüftungsklappe 14 möglich, doch unterstützt ihr öffnen den Luftwechsel im Raume. Es können auch mehrere Lüftungsklappen verwendet werden.

Auch bei diesem Ausführungsbeispiel der Erfindung kann, zumindest für einige Zeit, durch entsprechende Auslegung der Saugventilatoren ein gewisser Unterdruck im Raume 1 aufrechterhalten werden, was durch gut dichtende Lüftungsklappen noch unterstützt wird. Damit wird die Möglichkeit einer Diffusion schädlicher Gase aus dem Raume 1 in einen darüberliegenden Wohnraum weitgehend ausgeschaltet.

Im Raume 1 ist ferner die Messvorrichtung 16 installiert, die für die Feststellung des Vorhandenseins und der Konzentration eines der oben erwähnten schädlichen Gase vorgesehen ist. Sie ist über die Leitung 17 mit der Elektronik 15 verbunden. Ein zulässiger Maximalwert der Konzentration des betreffenden Gases ist wahlweise festlegbar. Wird er überschritten, schliesst die: Elektronik sofort die Schaltstelle 6 im Stromkreis 7. Die Ventilatoren 12 beginnen zu laufen und damit setzt die Zwangsbelüftung des Raumes 1 ein, was notgedrungen sogar bei einem Gleichgewicht zwischen Aussenund Innentemperatur erfolgt.

Auch die Überwachung der Stillstandszeit der Ventilatoren seit der letzten Durchlüftung des Raumes kann eine die 'Zwangsbelüftung auslösende Messgrösse liefern. Es wurde schon oben darauf hingewiesen, dass bei einer Durchlüftung auch die Konzentration schädlicher Gase herabgesetzt wird. Bleibt die nächste Durchlüftung zu lange aus, so wird nach einer festlegbaren maximal zulässigen Stillstandszeit der Ventilatoren und damit einem zu langen Ausbleiben der Durchlüftung des Raumes eine Zwangsbelüftung durch die Elektronik ausgelöst.

Die Messvorrichtung 16 kann auch ein Sensor sein für das Mass der Feuchtigkeit in Bauteilen aus Holz, welches für einen Zerfall am anfälligsten ist. Auch hier muss bei Überschreitung eines in die Elektronik eingegebenen, noch zulässigen Höchstwertes die Zwangsbelüftung möglichst rasch eingeschaltet werden. Doch ist in diesem Falle darauf zu achten, dass die Aussenlufttemperatur tiefer liegt als die Raumtemperatur, um die Gefahr eines weiteren Feuchtigkeitsniederschlags am Holz zu vermeiden. Das kann ebenfalls durch die Elektronik 15 überwacht werden.

Die Zwangsbelüftung wird beendet, sobald der jeweils festgelegte Maximalwert der Messgrösse wieder unterschritten ist. Eine andere Möglichkeit besteht darin, die Ventilatoren nach Ablauf einer vorgewählten Zeitspanne wieder abzuschalten, Spricht nachher die Messvorrichtung noch immer an, wird sofort ein weiterer Zyklus der Zwangsbelüftung eingeleitet.

Es ist von Vorteil, wenn eine Alarmanlage 18 vorgesehen wird, die mit der Messvorrichtung 16 verbunden ist. Sobald die Messgrösse den gewählten Maximalwert überschreitet, und die Elektronik die Zwangsbelüftung einschaltet, wird gleichzeitig ein optisches oder ein akustisches Signal ausgelöst.

Es kann dazu auch eine bereits vorhandene Alarmanlage verwendet werden, die z.B. für die Anzeige von Übertemperatur in einem klimatisierten Raume, von Hochwasser oder eindringendem Regenwasser, für einen Rauch- oder Feueralarm installiert ist.

Bei solchen kombinierten Alarmanlagen ist es zweckmässig, Sirenen mit unterschiedlichem Klange zur sofortigen Identifizierung des Anlasses für den Alarm einzusetzen. Als weitere Sicherung kann die Alarmanlage 18, unabhängig vom verwendeten Stromnetz, von einem Akkumulator gespeist werden.

## Patentansprüche

1. Verfahren zur Zustandsregelung der klimatischen Verhältnisse in einem Innenraum unter Einhaltung der Raumtemperatur innerhalb einen wählbaren Bandbreite durch gesteuerte Durchlüftung des Raumes mit Aussenluft, wobei die Temperatur t_{A} der Aussenluft und die Temperatur t_{R} des Raumes gemessen werden, und sobald die aus diesen beiden Temperaturen ermittelte Differenz einen wählbaren Minimalwert überschreitet, die Durchlüftung durch Schliessen eines Stromkreises ausgelöst wird, in welchem der Antriebsmotor mindestens eines Ventilators liegt, und sobald die Differenz unter den Minimalwert absinkt, der Stromkreis unterbrochen wird, **dadurch gekennzeichnet, dass** die Auswirkung der Aussenluft- und der Raumtemperatur auf die zu bildende Differenz vertauschbar ist, indem zur Kühlung des Raumes (1) t_{R}-t_{A} und zur Erwärmung t_{A}-t_{R} gebildet wird, und dass dieser Regelvorgang durch den Einfluss mindestens einer Führungsgrösse überlagert wird, welche bei Überschreiten eines wählbaren Grenzwertes auf den Stromkreis (7) im Sinne eines Unterbrechens oder Schliessens desselben einwirkt, wobei die Raumtemperatur die eine Führungsgrösse bildet, deren Einfluss bei Überschreitung des oberen Grenzwertes der Bandbreite die Differenzbildung auf Kühlung des Raumes einstellt und der Stromkreis geschlossen wird, und bei Unterschreitung des unteren Grenzwertes der Bandbreite die Differenzbildung auf Erwärmung des Raumes einstellt und der Stromkreis gleicherweise geschlossen wird, und in beiden Fällen, sobald eine Raumtemperatur innerhalb der Bandbreite wieder erreicht ist, der Stromkreis unterbrochen wird.

2. Verfahren nach Anspruch 1, **dadurch gekennzeichnet, dass** der Feuchtigkeitsgehalt der Luft im Raume (1) eine zusätzliche Führungsgrösse bildet.

3. Verfahren nach Anspruch 1, **dadurch gekennzeichnet, dass** ein messbarer physikalischer, chemischer oder biologischer Zustand eines im Raume (1) vorhandenen Gutes eine zusätzliche Führungsgrösse bildet.

4. Verfahren nach Anspruch 1, **dadurch gekennzeichnet, dass** bei Überschreitung eines festlegbaren, zulässigen Maximalwertes einer Messgrösse eine Zwangsbelüftung des Raumes (1) eingeschaltet wird, die bei Unterschreitung des Maximalwertes wieder abgeschaltet wird.

5. Verfahren nach Anspruch 4, **dadurch gekennzeichnet, dass** die Stillstandszeit eines Ventilators (12) seit der letzten Duchlüftung des Raumes (1) die Messgrösse bildet.

6. Verfahren nach Anspruch 4, **dadurch gekennzeichnet, dass** die Konzentration eines schädlichen Gases im Raume (1) die Messgrösse bildet.

7. Verfahren nach Anspruch 4, **dadurch gekennzeichnet, dass** der Feuchtigkeitsgrad eines Bauteiles im Raume (1) die Messgrösse bildet.

8. Verfahren nach einem der Ansprüche 5 bis 7, **dadurch gekennzeichnet, dass** die Zwangsbelüftung des Raumes (1) nach Ablauf einer wählbaren Zeitspanne wieder abgeschaltet wird.

9. Verfahren nach Anspruch 4, **dadurch gekennzeichnet, dass** gleichzeitig mit der Einschaltung der Zwangsbelüftung des Raumes (1) ein Alarm ausgelöst wird.

10. Regeleinrichtung zur Durchführung des Verfahrens nach Anspruch 1, ausgestattet mit einem Temperaturfühler (2) innerhalb des Raumes (1), einem Temperaturfühler (3) in der umgebenden Atmosphäre, mit einer Elektronik (4,15), welche sowohl für die Differenzbildung aus den von den beiden Temperaturfühlern gemessenen Temperaturen als auch für eine Vertauschbarkeit der Eingangsstellen der Verbindungsleitungen von den Temperaturfühlern in die Elektronik eingerichtet und mit einer Schaltstelle (6) im Stromkreis (7) verbunden ist, in welchem der Antriebsmotor (11) mindestens eines Ventilators (12) liegt, ferner ausgestattet mit einem doppelwirkenden Thermostat (8) im Raume (1), welcher mit der Elektronik in Verbindung steht und dafür eingerichtet ist, bei Überschreitung eines wählbaren Grenzwertes der Raumtemperatur t_{R} die Elektronik auf Kühlung des Raumes durch Aussenluft einzustellen, und bei Unterschreitung eines wählbaren unteren Grenzwertes der Raumtemperatur die Elektronik auf Erwärmung des Raumes durch Aussenluft einzustellen.

11. Regeleinrichtung nach Anspruch 10, **gekennzeichnet durch** ein Messgerät für eine zusätzliche Führungsgrösse, welches mit der Elektronik (4,15) in Verbindung steht.

12. Regeleinrichtung nach Anspruch 10, **gekennzeichnet durch** eine mit der Elektronik (4,15) verbundene Messvorrichtung (16) für eine Messgrösse zur Ingangsetzung einer Zwangsbelüftung des Raumes (1) **durch** Schliessen einer Schaltstelle in einer Parallelleitung zum'Stromkreis (7), welche die Schaltstelle (6) überbrückt.

13. Regeleinrichtung nach Anspruch 10, **dadurch gekennzeichnet, dass** der Antriebsmotor (11) des Ventilators (12) reversierbar ist.

14. Regeleinrichtung nach den Ansprüchen 12 und 13, **dadurch gekennzeichnet, dass** mindestens ein Ventilator (12) für die Absaugung der Luft aus dem Raume (1) gleichzeitig mit der Zwangsbelüftung einschaltbar ist.

15. Regeleinrichtung nach Anspruch 10, **dadurch gekennzeichnet, dass** mindestens eine Lüftungsklappe (14) für den Raum (1) vorgesehen ist, die während der Durchlüftung und der Zwangsbelüftung des Raumes (1) geöffnet ist.

## Claims

1. Method for controlling the climatic conditions in an interior space while maintaining the space temperature within a selectable range by means of controlled ventilation of the space with external air, the temperature t_{A} of the external air and the temperature t_{R} of the space being measured, and as soon as the difference determined from these two temperatures exceeds a selectable minimum value, the ventilation is triggered by closing a circuit in which the drive motor of at least one fan is located, and as soon as the difference drops below the minimum value, the circuit is disconnected, **characterized in that** the effect of the external air temperature and of the temperature of the space on the difference to be formed can be interchanged by forming t_{R}-t_{A} to cool the space (1) and t_{A}-t_{R} to heat it, and **in that** the influence of at least one control variable is superimposed on this control process, said control variable acting on the circuit (7) in the sense of disconnecting or closing it when a selectable limiting value is exceeded, the temperature of the space forming said one control variable whose influence sets the difference-forming means to cooling the space, and the circuit is closed when the upper limiting value of the range is exceeded, and sets the difference-forming means to heating the space and the circuit is also closed when the value drops below the lower limiting value of the range, and in both cases the circuit is disconnected as soon as the space reaches a temperature within the range again.

2. Method according to Claim 1, **characterized in that** the moisture content of the air in the space (1) forms an additional control variable.

3. Method according to Claim 1, **characterized in that** a measurable physical, chemical or biological state of a product which is present in the space (1) forms an additional control variable.

4. Method according to Claim 1, **characterized in that**, when a definable, permissible maximum value of a measurement variable is exceeded, forced ventilation of the space (1) is switched on, and it is switched off again when the value drops below the maximum value.

5. Method according to Claim 4, **characterized in that** the time for which a fan (12) was deactivated since the last ventilation of the space (1) forms the measurement variable.

6. Method according to Claim 4, **characterized in that** the concentration of a noxious gas in the space (1) forms the measurement variable.

7. Method according to Claim 4, **characterized in that** the degree of the moisture of a component in the space (1) forms the measurement variable.

8. Method according to one of Claims 5 to 7, **characterized in that** the forced ventilation of the space (1) is switched off again after a selectable time period has elapsed.

9. Method according to Claim 4, **characterized in that** an alarm is triggered at the same time as the forced ventilation of the space (1) is switched on.

10. Control device for carrying out the method according to Claim 1, equipped with a temperature sensor (2) within the space (1), a temperature sensor (3) in the surrounding atmosphere, with electronics (4, 15) which are designed both to form differences between the temperatures measured by the two temperature sensors and to permit the input points of the connecting lines from the temperature sensors into the electronics to be exchangeable, and are connected to a switching point (6) in the circuit (7) in which the drive motor (11) of at least one fan (12) is located, which control device is also equipped with a double-acting thermostat (8) in the space (1) which is connected to the electronics and is designed to set the electronics to cooling of the space by means of external air when a selectable limiting value of the temperature t_{R} of the space is exceeded, and to set the electronics to heating the space by means of external air when the value for the temperature of the space drops below a selectable lower limiting value.

11. Control device according to Claim 10, **characterized by** a measuring device for an additional control variable which measuring device is connected to the electronics (4, 15).

12. Control device according to Claim 10, **characterized by** a measuring equipment (16), connected to the electronics (4, 15), for a measurement variable for activating forced ventilation of the space (1) by closing a switching point on a parallel line to the circuit (7) which bypasses the switching point (6).

13. Control device according to Claim 10, **characterized in that** the drive motor (11) of the fan (12) is reversible.

14. Control device according to Claims 12 and 13, **characterized in that** at least one fan (12) for sucking the air out from the space (1) can be switched on simultaneously with forced ventilation.

15. Control device according to Claim 10, **characterized in that** at least one ventilation flap (14) for the space (1) is provided, which ventilation flap (14) is opened during the ventilation and the forced ventilation of the space (1).

## Revendications

1. Procédé pour la régulation de l'état des conditions climatiques dans un local intérieur en maintenant la température du local dans une bande sélectionnable, par aération contrôlée du local avec de l'air extérieur, la température t_{A} de l'air extérieur et la température t_{R} du local étant mesurées et dès que la différence déterminée à partir de ces deux températures dépasse une valeur minimale sélectionnable, l'aération est déclenchée en fermant un circuit électrique dans lequel se trouve le moteur d'entraînement d'au moins un ventilateur, et dès que la différence devient inférieure à la valeur minimale, le circuit électrique est interrompu, **caractérisé en ce que** l'effet de la température de l'air extérieur et la température du local peut être lié à la différence à obtenir en calculant t_{R}-t_{A} pour refroidir le local (1) et en calculant t_{A}-t_{R} pour le réchauffer, et que l'influence d'au moins une grandeur de référence est superposée à ce processus de régulation, laquelle agit sur le circuit électrique (7) dans le sens d'une interruption ou d'une fermeture de celui-ci en cas de dépassement d'une valeur limite sélectionnable, la température du local constituant ici la grandeur de référence dont l'influence fixe le calcul de la différence pour le refroidissement du local en cas de dépassement de la valeur limite supérieure de la bande et ferme le circuit électrique et, si elle devient inférieure à la valeur limite inférieure de la bande, fixe le calcul de la différence pour le réchauffement du local et ferme également le circuit électrique et, dans les deux cas, dès que la température du local a de nouveau atteint une valeur comprise dans la bande, interrompt le circuit électrique.

2. Procédé selon la revendication 1, **caractérisé en ce que** le taux d'humidité de l'air du local (1) constitue une grandeur de référence supplémentaire.

3. Procédé selon la revendication 1, **caractérisé en ce qu'**un état physique, chimique ou biologique mesurable d'une marchandise présente dans le local (1) constitue une grandeur de référence supplémentaire.

4. Procédé selon la revendication 1, **caractérisé en ce qu'**une ventilation forcée du local (1) est activée en cas de dépassement d'une valeur maximale autorisée paramétrable d'une grandeur mesurée, laquelle est de nouveau désactivée après être revenu en-deçà de la valeur maximale.

5. Procédé selon la revendication 4, **caractérisé en ce que** le temps d'immobilité d'un ventilateur (12) constitue la grandeur mesurée depuis la dernière ventilation du local (1).

6. Procédé selon la revendication 4, **caractérisé en ce que** la concentration d'un gaz toxique dans le local (1) constitue la grandeur mesurée.

7. Procédé selon la revendication 4, **caractérisé en ce que** le taux d'humidité d'un élément de construction dans le local (1) constitue la grandeur mesurée.

8. Procédé selon l'une des revendications 5 à 7, **caractérisé en ce que** la ventilation forcée du local (1) est réactivée après écoulement d'une durée sélectionnable.

9. Procédé selon la revendication 4, **caractérisé en ce qu'**une alarme est déclenchée simultanément avec l'activation de la ventilation forcée du local (1).

10. Dispositif de régulation pour mettre en oeuvre le procédé selon la revendication 1, équipé d'une sonde de température (2) à l'intérieur du local (1), d'une sonde de température (3) dans l'atmosphère environnante, comportant un circuit électronique (4, 15) qui est configuré à la fois pour calculer la différence entre les températures mesurées par les deux sondes de température et pour intervertir les points d'entrée des câbles de liaison des sondes de température dans le circuit électronique et qui est relié avec un point de commutation (6) au circuit électrique (7) dans lequel se trouve le moteur d'entraînement (11) d'au moins un ventilateur (12), également équipé d'un thermostat à double effet (8) dans le local (1), lequel est relié au circuit électronique et est configuré pour commuter le circuit électronique en mode refroidissement du local avec de l'air extérieur en cas de dépassement d'une valeur limite sélectionnable de la température du local t_{R} et, pour commuter le circuit électronique en mode chauffage du local avec de l'air extérieur si la température du local devient inférieure à une valeur limite inférieure sélectionnable.

11. Dispositif de régulation selon la revendication 10, **caractérisé par** un appareil de mesure pour une grandeur de référence supplémentaire, lequel est relié au circuit électronique (4, 15).

12. Dispositif de régulation selon la revendication 10, **caractérisé par** un dispositif de mesure (16) d'une grandeur mesurée, relié au circuit électronique (4, 15), pour la mise en service d'une ventilation forcée du local (1) en fermant un point de commutation dans une ligne parallèle au circuit électrique (7), lequel court-circuite le point de commutation (6).

13. Dispositif de régulation selon la revendication 10, **caractérisé en ce que** le moteur d'entraînement (11) du ventilateur (12) est réversible.

14. Dispositif de régulation selon les revendications 12 et 13, **caractérisé en ce qu'**au moins un ventilateur (12) peut être mis en marche simultanément avec la ventilation forcée pour aspirer l'air du local (1).

15. Dispositif de régulation selon la revendication 10, **caractérisé en ce qu'**il est prévu au moins un volet de ventilation (14) pour le local (1), lequel est ouvert pendant l'aération et pendant la ventilation forcée du local (1).
